## Europäisches Patentamt
## European Patent Office
## Office européen des brevets

(19)

(11) Veröffentlichungsnummer: **0 012 708**
**B1**

(12)

# EUROPÄISCHE PATENTSCHRIFT

(45) Veröffentlichungstag der Patentschrift:
07.09.83

(51) Int. Cl.³: **H 02 B 13/02**

(21) Anmeldenummer: **79730009.2**

(22) Anmeldetag: **22.11.79**

(54) **Mehrphasige, metallgekapselte, druckgasisolierte Schaltvorrichtung für Hochspannungsschaltanlagen.**

(30) Priorität: **05.12.78 DE 2852950**

(43) Veröffentlichungstag der Anmeldung:
**25.06.80 Patentblatt 80/13**

(45) Bekanntmachung des Hinweises auf die Patenterteilung:
**07.09.83 Patentblatt 83/36**

(84) Benannte Vertragsstaaten:
**AT BE CH DE FR GB IT LU NL SE**

(56) Entgegenhaltungen:
**CH-A-558 604**
**DE-A-2 057 740**
**DE-A-2 259 058**
**DE-A-2 720 325**
**FR-A-2 346 884**
**FR-A-2 379 900**

(73) Patentinhaber: **SIEMENS AKTIENGESELLSCHAFT,
Berlin und München Wittelsbacherplatz 2,
D-8000 München 2 (DE)**

(72) Erfinder: **Fischer, Dietrich, Altenburger Allee 3,
D-1000 Berlin 19 (DE)**
Erfinder: **Pircher, Christian, Potsdamer Strasse 93,
D-1000 Berlin 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Mehrphasige, metallgekapselte, druckgasisolierte Schaltvorrichtung für Hochspannungsschaltanlagen

Die vorliegende Erfindung betrifft eine mehrphasige, metallgekapselte, durckgasisolierte Schaltvorrichtung für Hochspannungsschaltanlagen, die, im Verlauf eines Sammelschienensystems eingesetzt, mit einer je Phase vorgesehenen Schaltstelle eines Abzweiges in Winkelausführung versehen ist, wobei jede Schaltstelle zwei in der Ausschaltstellung eine Trennstrecke bildende Kontaktteile aufweist, deren Hochspannung führenden Kontaktteile im Bereich der Trennstrecke den kleinsten Durchmesser haben, und bei der in der gleichen Metallkapselung für jede Phase des Sammelschienensystems ein die Leiter einer Phase des Sammelschienensystems verbindender Anschlußleiter quer zur Achse mindestens einer anderen Schaltstelle mit Abstand davon zu einem zum Sammelschienenleiter führenden Durchführungsisolator in der Metallkapselung geführt ist.

Eine derartige Hochspannungsschaltanlage ist aus der FR-A-2 379 900 bekannt. Bei dieser bekannten Anordnung verlaufen auch innerhalb der Kapselung die die Sammelschienenleiter verbindenden Anschlußleiter jeweils in der gleichen Ebene wie die außerhalb der Kapselung verlaufenden Sammelschienenleiter und sind an der zum Abzweig führenden Schaltstelle der anderen Sammelschienenleiter im Bereich des die Löscheinrichtung einschließenden Gehäuses der Schaltstelle vorbeigeführt. Dementsprechend müssen verhältnismäßig große Abstände zwischen den Anschlußleitern und den benachbarten Schaltstellen vorgesehen werden, die eine entsprechend große Kapselung bedingen, damit eine ausreichende Spannungsfestigkeit gegeben ist. Außerdem liegen bei der bekannten Anordnung sämtliche Trennstrecken der Schaltstellen in einer gleichen senkrecht zu ihren Achsen verlaufenden Ebene.

Weiterhin ist aus der DE-A1-2 720 325 eine Schaltanlage bekannt, bei der in der gleichen Kapselung Trennstrecken sowohl im Verlauf der Verbindung der Sammelschinensysteme untereinander als auch im Verlauf des winklig dazu liegenden Abzweiges vorgesehen sind. Demzufolge ist der Raumbedarf für die Kapselung wesentlich größer. Die Trennstrecken liegen auch jeweils für alle Leiter des Sammelschienensystems bzw. des Abzweiges in einer gleichen Ebene.

Eine andere gekapselte Hochspannungsschaltanlage ist aus der FR-A1-2 346 884 bekannt. Bei dieser ist innerhalb einer Kapselung ein Trennschalter angeordnet, der zwei Sammelschienensysteme voneinander trennt bzw. miteinander verbindet. Der Trennschalter liegt aber nicht in einem Abzweig in Winkelausführung. Die Trennstrecken des Trennschalters liegen jeweils senkrecht zum Verlauf der Leiter der Sammelschienensysteme und sind in gleicher Höhe angeordnet. Deshalb müssen die obenliegenden Leiter des Sammelschienensystems nach unten abgeknickt werden, damit sie zu dem entsprechenden Kontaktteil der Trennstrecke hingeführt werden können, die untenliegenden Leiter sind nach oben abgeknickt. Dazu ist der zwischen dem Durchführungsisolator, der zum Sammelschienensystem führt, und dem Kontaktteil des Trennschalters liegende Anschlußleiter so abgeknickt, daß er im wesentlichen im Bereich der Kontaktteile an der benachbarten Schaltstelle vorbeigeführt ist, d. h. in einem Bereich, dessen Durchmesser wesentlich größer ist als der Durchmesser der Leiter, welche die Trennstrecke selbst überbrücken.

Schließlich ist es aus der CH-A-558 604 bekannt, innerhalb einer Kapselung einem Anschlußleiter, der an zwei anderen vorbeigeführt werden muß, an dieser Stelle einen anderen Querschnitt zu geben, um einen genügend weiten Abstand zu den beiden anderen Leitern zu gewinnen.

Der Erfindung liegt dagegen die Aufgabe zugrunde, die Metallkapselung einer Schaltvorrichtung der eingangs genannten Art in ihren Abmessungen möglichst klein aufzubauen, um den erforderlichen Raumbedarf zu verringern.

Diese Aufgabe wird gemäß der Erfindung dadurch gelöst, daß die Trennstrecken der Schaltstellen in zwei unterschiedlichen, senkrecht zu ihren Achsen liegenden Ebenen angeordnet sind und daß die Anschlußleiter jeweils nur im Bereich der Trennstrecke an der bzw. den anderen Schaltstellen vorbeigeführt sind und die auf beiden Seiten der Metallkapselung liegenden Leiter der Phasen des Sammelschienensystems so miteinander verbinden, daß die Phasen gegeneinander um 180° gedreht angeordnet sind. Durch das Vorbeiführen des Anschlußleiters, der die Sammelschienenleiter der geleichen Phase miteinander verbindet, an den anderen Schaltstellen jeweils nur im Bereich der Trennstrecke. Das heißt im Bereich des kleinsten Durchmessers, lassen sich die notwendigen Abstände zwischen den einzelnen Leitern besonders günstig einhalten, wodurch die Abmessungen der Kapselung insgesamt vorteilhaft verkleinert werden können. Da die Trennstrecken der Schaltstellen außerdem in zwei unterschiedlichen senkrecht zu ihren Achsen liegenden Ebenen angeordnet sind und die auf beiden Seiten der Kapselung liegenden Leiter des Sammelschienensystems durch die Anschlußleiter so miteinander verbunden werden, daß die Phasen gegeneinander um 180° gedreht sind, erzielt man außerdem für jeden Anschlußleiter eine optimal kurze Länge. Der Materialaufwand für die Hochspannungsschaltanlage ist also ebenfalls gering gehalten, sowohl für das Leitermaterial, als auch für das zur Isolierung dienende Druckgas.

In einer Weiterbildung der Erfindung ist vorgesehen, daß die Schaltstellen Lasttrennschaltstellen sind, deren Trennstrecken mit Löschgas versorgt werden. Wegen der notwendigen Löscheinrichtung sind Lasttrennschaltstellen naturgemäß großbauend. Dennoch ist es durch Anwendung der Erfindung möglich, die Abmessungen der Metallkapselung so klein zu machen, daß derartige Schaltvorrichtungen in ihrem Raumbedarf an die übrigen Moduln einer Schaltanlage angepaßt sind.

In Weiterbildung der Erfindung ist vorgesehen, daß die Löschgasströmung im Bereich der Trennstrecken durch einen Saugkolben erzeugt wird. Auf diese Weise ergibt sich ein Lasttrennschalter mit einem sehr kleinen Durchmesser im Bereich der Trennstrecke.

Bei einer Ausbildung der Schaltvorrichtung beispielsweise als Sammelschienenabgangstrenner für eine dreipolige Sammelschiene besitzt jede der drei Schaltstellen zwei Anschlußleiter. Auf beiden Seiten der Metallkapselung werden die drei Pole der Sammelschiene über drei Stützisolatoren, die in einem die Metallkapselung abschließenden Flansch angeordnet sind, mit drei Anschlußleitern verbunden. Die Mittelpunkte der Stützisolatoren liegen in den Flanschebenen jeweils in den Ecken eines gedachten gleichseitigen Dreiecks. Handelt es sich um kreisförmige Flanschteile, so kann deren Durchmesser am kleinsten sein, wenn das Dreieck auf der einen Seite durch Drehung um 180° um seinen Mittelpunkt in das Dreieck auf der anderen Seite überführt werden kann. Sind dabei die Trennstrecken, wie vorteilhaft vorgesehen, in unterschiedlichen Ebenen angeordnet, so ergeben sich überwiegend kurze Anschlußleiter.

Bei einer gemäß der Erfindung ausgestalteten Schaltvorrichtung können die Schaltstellen jeweils mit ihrem kurzen Anschlußleiter mechanisch starr mit einem Flanschteil verbunden sein. Durch den dadurch erzielten kurzen Kraftübertragungsweg ist die Verbindung so tragfähig, daß auf eine zusätzliche Halterung der Schaltstellen verzichtet werden kann. Gleichzeitig kann der jeweils längere Anschlußleiter mit Spiel befestigt sein, um Wärmeausdehnungen ausgleichen zu können.

Im folgenden ist anhand zweier Figuren ein Ausführungsbeispiel der Erfindung näher erläutert.

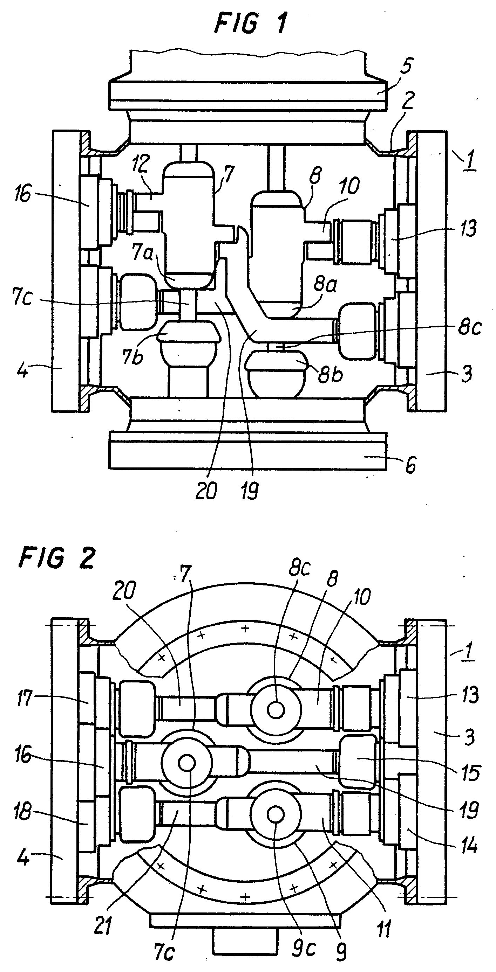

Dabei zeigt Fig. 1 teilweise geschnitten eine schematische Seitenansicht einer dreiphasigen metallgekapselten, druckgasisolierten Schaltvorrichtung mit Lasttrennschaltstellen.

Fig. 2 zeigt die entsprechende Draufsicht.

Die Fig. 1 zeigt eine Schaltvorrichtung 1 als Sammelschienenabgangstrenner mit einer Metallkapselung 2, die an der rechten und linken sowie oberen und unteren Seite je mit einem Flanschteil 3 bis 6 versehen, insbesondere gasdicht abgeschlossen ist. Im Innern der Metallkapselung 2 befinden sich drei identische Lasttrennschaltstellen 7 bis 9, von denen in der Seitendarstellung der Fig. 1 nur die zwei Lasttrennschaltstellen 7 und 8 sichtbar sind. Jede Lasttrennschaltstelle besteht aus zwei Kontaktteilen 7a, 7b, 8a und 8b, die durch einen hohlen Kontaktstift 7c, 8c bzw. 9c verbindbar sind. Die Lasttrennschaltstellen 8 und 9 sind jeweils durch einen kurzen Anschlußleiter 10 bzw. 11 über Stützisolatoren 13 bzw. 14 mit dem Flanschteil 3 mechanisch starr verbunden. Auf der anderen Seite ist die Lasttrennschaltstelle 7 über einen kurzen Anschlußleiter 12 und einen Stützisolator 16 mit dem Flanschteil 4 starr verbunden. Durch die Stützisolatoren hindurch sind die Anschlußleiter mit den hier nicht dargestellten Polen einer Sammelschiene verbunden.

Von den Lasttrennschaltstellen 7 bis 9 gehen weiterhin Anschlußleiter 19 bis 21 aus, die die jeweils anderen Lasttrennschaltstellen im Bereich der Trennstrecke kreuzen. Im Einschaltzustand der Lasttrennschaltstellen 7 bis 9 führen diese Anschlußleiter 19 bis 21 an den Kontaktstiften 7c bzw. 8c und 9c vorbei.

In den Ebenen der Flanschteile 3 und 4 liegen die Mittelpunkte der Stützisolatoren 13 bis 15 bzw. 16 bis 18 in den Ecken eines gedachten gleichseitigen Dreiecks. Dabei zeigt das Dreieck in der Ebene des Flanschteils 4 mit der Spitze nach oben, das Dreieck in der Ebene des Flanschteiles 3 mit der Spitze nach unten. Durch die erfindungsgemäße Verwendung von Lasttrennschaltstellen mit einem kleinsten Durchmesser im Bereich der Trennstelle sowie die spezielle Führung der Anschlußleiter 19 bis 21 und durch die zusätzliche tiefere Anordnung der beiden Lasttrennschaltstellen 8 und 9 in Richtung ihrer Achsen gegenüber der Lasttrennschaltstelle 7 ergibt sich eine besonders raumsparende Anordnung der Schaltstellen und damit möglichst kleine Abmessungen der Metallkapselung 2. Außerdem sind die Anschlußleiter 10 bis 12 und 19 bis 21 besonders kurz und einfach geformt.

In Fig. 2 sind gleiche Teile mit gleichen Bezugszeichen versehen. In der Draufsicht dieser Figur ist ersichtlich, daß die Achsen der drei Lasttrennschaltstellen 7 bis 9 in den Ecken eines gleichseitigen Dreiecks liegen. Wie auch dieser Ansicht zu entnehmen ist, ist der Abstand zwischen den drei Lasttrennschaltstellen 7 bis 9 dadurch besonders klein, weil die Anschlußleiter 19 bis 21 die jeweils anderen Lasttrennschaltstellen gerade im Bereich der Trennstrecke und damit im Bereich kleinsten Durchmessers kreuzen.

In den beiden Fig. 1 und 2 ist als ein Ausführungsbeispiel der Erfindung ein Sammelschienenabgangstrennschalter beschrieben. Ebenso vorteilhaft läßt sich die Erfindung auch auf einen Winkeltrenneschalter anwenden, der z. B. einen Kabelanschluß speist.

## Patentansprüche

1. Mehrphasige, metallgekapselte, druckgasisolierte Schaltvorrichtung für Hochspannungsschaltanlagen, die, im Verlauf eines Sammelschienensystems eingesetzt, mit einer je Phase vorgesehenen Schaltstelle (7, 8, 9) eines Abzweigs in Winkelausführung versehen ist, wobei jede Schaltstelle (7, 8, 9) zwei in der Ausschaltstellung eine Trennstrecke bildende Kontaktteile (7a, 7b, 8a, 8b) aufweist, deren Hochspannung führenden Kontaktteile im Bereich der Trennstrecke den kleinsten Durchmesser haben, und bei der in der gleichen Metallkapselung (2) für jede Phase des Sammelschienensystems ein die Leiter der Phase des Sammelschienensystems verbindender Anschlußleiter (19, 20, 21) quer zur Achse mindestens einer anderen Schaltstelle (7, 8, 9) mit Abstand davon zu einem zum Sammelschienenleiter führenden Durchführungsisolator in der Metallkapselung (2) geführt ist, dadurch gekennzeichnet, daß die Trennstrecken der Schaltstellen (7, 8, 9) in zwei unterschiedlichen, senkrecht zu ihren Achsen liegenden Ebenen angeordnet sind und daß die Anschlußleiter (19, 20, 21) jeweils nur im Bereich der Trennstrecke an der bzw. den anderen Schaltstellen (7, 8, 9) vorbeigeführt sind und die auf beiden Seiten der Metallkapselung (2) liegenden Leiter der Phasen des Sammelschienensystems so miteinander verbinden, daß die Phasen gegeneinander um 180° gedreht angeordnet sind.

2. Schaltvorrichtung nach Anspruch 1, dadurch gekennzeichnet, daß die Schaltstellen (7, 8, 9) Lasttrennschaltstellen sind, deren Trennstrecken mit Löschgas versorgt werden.

3. Schaltvorrichtung nach Anspruch 1 oder 2, dadurch gekennzeichnet, daß die Löschgasströmung im Bereich der Trennstrecken durch einen Saugkolben erzeugt wird.

## Claims

1. Multi-phase, metal-encapsulated, high-pressure-insulated switching device for high-voltage switchgears, which is inserted into the course of a bus bar system and provided with a switching point (7, 8, 9) provided for each phase of a branch in angular form, where each switching point (7, 8, 9) has two contact components (7a, 7b, 8a, 8b) establishing an isolating gap in the switch-off position and whose high-voltage-carrying contact components have the smallest diameter in the region of the isolating gap, and wherein in the same metal encapsulation (2), for each phase of the bus bar system, a terminal conductor (19, 20, 21), connecting the conductors of the phase of the bus bar system, is led, transversely to the axis of at least one other switching point (7, 8, 9) at a distance therefrom, to a lead-through insulator in the metal encapsulation and leading to the bus bar conductor characterised in that the isolating gaps of the switching points (7, 8, 9) are arranged in two different planes lying at right angles to their axes, and that the terminal conductors are directed past the switching point or the other switching points (7, 8, 9) as the case may be, only in the region of the isolating gap and the conductors of the phases of the bus bar system, which are arranged on both sides of the metal encapsulation (2), are so connected to one another, that the phases are arranged so as to be mutually rotated by 180°.

2. Switching device as claimed in claim 1, characterised in that the switching points (7, 8, 9) are load-isolating switching points whose isolating gaps are provided with quenching gas.

3. Switching device as claimed in claim 1 or 2, characterised in that in the region of the isolating gaps the quenching gas flow is produced by a suction piston.

## Revendications

1. Dispositif de coupure polyphasé à enveloppe métallique, isolé par un gaz sous pression, pour des installations de coupure à haute tension, qui, inséré dans un système de barres omnibus, est muni pour chaque phase d'un système de coupure (7, 8, 9) d'une dérivation réalisée sous forme coudée, chaque système de coupure (7, 8, 9) comportant deux contacts (7a, 8a, 7b, 8b) formant un intervalle de coupure dans la position de mise hors circuit, dont les contacts conduisant la haute tension possèdent le diamètre minimal dans la région d'intervalle de coupure, et dans lequel dans la même capsule métallique (2), pour chaque phase du système de barres omnibus, un conducteur de raccordement (19, 20, 21) reliant les conducteurs de la phase du système de barres omnibus est amené dans la capsule métallique (2), transversalement par rapport à l'axe d'au moins un autre système de coupure (7, 8, 9), à une certaine distance de celui-ci, jusqu'à un isolateur de traversée conduisant au conducteur des barres omnibus, caractérisé par le fait que les intervalles de coupure des systèmes de coupure (7, 8, 9) sont disposés dans deux plans différents, perpendiculaires à leurs axes, et que les conducteurs de raccordement (9, 20, 21) passent respectivement devant l'autre ou les autres systèmes de coupure (7, 8, 9) uniquement dans la région d'intervalle de coupure, et les conducteurs des phases du système de barres omnibus qui se trouvent des deux côtés de la capsule métallique (2) sont reliés de manière que les phases soient disposées en étant tournées de 180° l'une par rapport à l'autre.

2. Dispositif de coupure suivant la revendication 1, caractérisé par le fait que les systèmes de coupure (7, 8, 9) sont des systèmes de coupure en charge dont les intervalles de coupure sont alimentés en gaz d'extinction.

3. Dispositif de coupure suivant la revendication 1 ou 2, caractérisé par le fait que le flux de gaz d'extinction dans la région des intervalles de coupure est produit par un piston d'aspiration.

## FIG 1

## FIG 2